# EUROPÄISCHE PATENTANMELDUNG

(11) **EP 0 652 270 A2**
(43) Veröffentlichungstag der Anmeldung: **10.05.1995**
(21) Anmeldenummer: 94114970.0
(22) Anmeldetag: 22.09.1994
(51) Int. Cl.: C09D 193/00

(54) **Wasserverdünnbares, lasierendes oder deckendes Anstrichmittel**

(30) Priorität: 08.11.1993 DE 4338110
(71) Anmelder: Auro Pflanzenchemie GmbH, D-38122 Braunschweig (DE)
(72) Erfinder: Licht, Matthias, D-38102 Braunschweig (DE)
(74) Vertreter: Dipl.-Phys.Dr. Manitz Dipl.-Ing. Finsterwald Dipl.-Ing. Grämkow Dipl.-Chem.Dr. Heyn Dipl.-Phys. Rotermund Morgan B.Sc.(Phys.)

(57) **Zusammenfassung**

Es wird ein wasserverdünnbares, lasierendes oder deckendes Anstrichmittel vorgeschlagen, das 0,05 - 2 Gew.-% Alkalien, 1,2 - 20 Gew.-% natürliche harte und/oder natürliche gehärtete Harze, 1,56 - 50 Gew.-% natürliche Öle, deren Verseifungsprodukte und/oder Verkochungsprodukte, 0,05 - 10 Gew.-% Hilfsmittel, bis 10 Gew.-% natürliche Wachse, bis 30 Gew.-% Pigmente und/oder Farbstoffe, bis 30 Gew.-% Füllstoffe und als Rest Wasser enthält. Das Gewichtsverhältnis von Ölen, deren Verseifungsprodukten und/oder Verkochungsprodukten zu den Harzen liegt im Bereich von 1,3:1 bis 2,5:1.

## Beschreibung

Die vorliegende Erfindung betrifft ein wasserverdünnbares, lasierendes oder deckendes Anstrichmittel, das Harz, Öl, Hilfsmittel, Alkalien und Wasser enthält.

Wasserverdünnbare Anstrichmittel sind als Dispersions- oder oder Emulsionslacke und -farben mit unterschiedlichen Zusammensetzungen im Handel. Zum Teil werden diese Produkte aus synthetischen Bindemitteln, Pigmenten und Hilfsmitteln hergestellt. Die Bindemittel, z.B. Acrylat-Bindemittel, entstammen der Petrochemie, so daß ihre Herstellung technisch aufwendig ist.

Auch die zugesetzten Hilfsmittel, wie z.B. Emulgatoren, Konservierungsmittel und Netzmittel, sind synthetische Stoffe, die der Petrochemie entstammen. Teilweise werden wasserverdünnbare Anstrichmittel mit Bindemitteln natürlichen Ursprungs hergestellt. Als natürliche Harze werden z.B. Kolophonium und Dammarharz und als natürliche Öle z.B. Leinöl oder Leinöl- Standöl verwendet. Diesen Anstrichmitteln werden Trockenstoffe zugesetzt, um die Trockenzeiten der Anstrichmittel zu verkürzen. Als Trockenstoffe werden meist Octoate und Linoleate mit Cobalt, Mangan, Blei, Zirconium oder anderen Metallen als Metallkomponente verwendet, die in der Petrochemie entstammenden Lösemitteln eingesetzt werden. Durch diese Trockenstoffe werden somit zum Teil gesundheitsschädliche Metallionen sowie Lösemittel der Petrochemie in das Anstrichmittel eingeführt.

Aus der DE 30 03 918 C2 sind Caseinfarben bekannt, die außer Casein Lacca alba und Leinölfirnis als Bindemittel sowie Zinkoxidweiß und Titandioxid als Pigmente enthalten. Bei diesen Caseinfarben handelt es sich um ein Anstrichmittel für einen mineralischen Untergrund mit einem maximalen Gehalt von 4 % an Lacca alba und einem maximalen Gehalt von 7,5 % an Leinölfirnis. Lacca alba ist gebleichter Schellack, der durch Einwirkung von Chlorbleichlauge hergestellt wird, d.h. zur Modifizierung des natürlichen Harzes muß eine reizende und ätzende Verbindung eingesetzt werden. Als Ölkomponente wird ein durch Zusatz von Trockenstoffen modifiziertes Leinöl, nämlich Leinölfirnis, verwendet, so daß durch diese Komponente gesundheitsschädliche Metallionen sowie Lösemittel in die Caseinfarbe eingeführt werden. Bei diesen Caseinfarben mit relativ niedrigem Harz- und Ölgehalt sowie mit der Verwendung des wasserlöslicheren gebleichten Schellacks ist das Problem der Emulgierbarkeit weit geringer als bei Farben mit höheren Öl- und Harzgehalten, bei denen auf die Verwendung von gebleichtem Harz verzichtet wird.

Aus der DE 40 24 925 ist ein Bindemittel zur Verwendung bei Farben und Lacken bekannt, das ein Pflanzenöl, ein Pflanzenharz, Alkalien, Casein und Wasser enthält. Pflanzenöl und Pflanzenharz werden im Gewichtsverhältnis 1:1 eingesetzt.

Aufgabe der vorliegenden Erfindung ist es, ein wasserverdünnbares lasierendes oder deckendes Anstrichmittel bereitzustellen, das universell einsetzbar ist für Holz, Metall und mineralischen Untergrund, Bindemittel natürlichen Ursprungs enthält und ohne den Zusatz von Trockenstoffen mit gesundheitsschädlichen Metallionen und Lösemitteln der Petrochemie technisch vertretbare Trockenzeiten hat.

Zur Lösung dieser Aufgabe wird ein wasserverdünnbares Anstrichmittel vorgeschlagen, das Harz, Öl, Hilfsmittel, Alkalien und Wasser enthält und durch folgende Zusammensetzung gekennzeichnet ist:
0,05 - 2,5 Gew.-% Alkalien
1,2 - 20 Gew.-% natürliche harte und/oder natürliche, gehärtete Harze
1,56 - 50 Gew.-% natürliche Öle, deren Verseifungsprodukte und/oder Verkochungsprodukte
0,05 - 10 Gew.-% Hilfsmittel
0 - 10 Gew.-% natürliche Wachse
0 - 30 Gew.-% Pigmente und/oder Farbstoffe
0 - 30 Gew.-% Füllstoffe
Rest Wasser,
wobei das Gewichtsverhältnis von Ölen, deren Verseifungsprodukten und Verkochungsprodukten zu den Harzen 1,3: 1 bis 2,5:1 beträgt.

Durch die Verwendung von natürlichen harten oder natürlichen gehärteten Harzen sowie ein bestimmtes Gewichtsverhältnis von Ölen zu Harzen werden eine gute Emulgierbarkeit sowie technisch vertretbare Trockenzeiten erreicht, ohne daß zusätzlich Trockenstoffe verwendet werden müssen. Auf Stoffe aus der Petrochemie kann verzichtet werden. Ferner enthält das Anstrichmittel keine gesundheitsschädlichen Bestandteile. Im Unterschied zu den Caseinfarben der DE 30 03 918 C2 sind in den erfindungsgemäßen Anstrichmitteln kein Leinölfirnis und gebleichter Schellack enthalten.

Als natürliche harte oder natürliche gehärtete Harze können z.B. Dammar, Lärchenharz, Schellack, durch Salz oder Esterbildung gehärtetes Kolophonium, wie kalk- oder zinkgehärtetes Kolophonium oder Kolophonium-Glycerinester, verwendet werden.

Als natürliche Öle können Pflanzenöle, wie Leinöl, Ricinusöl, Safloröl, Holzöl sowie jeweils deren Standöle verwendet werden. Ferner können die Verseifungsprodukte, insbesondere die Natrium- und Kaliumsalze, eingesetzt werden. Es können auch Kombinationsverkochungen von Harz, Öl und Glycerin verwendet werden.

Als Alkalien werden vorzugsweise Ammoniak, Borax oder Hirschhornsalz verwendet.

Die Hilfsmittel können Mittel zur Viskositätseinstellung, zur pH-Einstellung, zur Konservierung und zum Dispergieren der Pigmente verwendet werden. Mindestens eines dieser Mittel ist in dem Anstrichmittel enthalten. Auch hier werden vorzugsweise Stoffe natürlichen Ursprungs eingesetzt. Zur Konservierung können etherische Öle, zur Viskositätseinstellung Ethanol, Quelltone (Bentonite), Pflanzengumme und Casein verwendet werden. Letzteres wirkt auch als Dispergiermittel für die Pigmente. Fettsäuren und Lecithine sind ebenfalls geeignete Dispergiermittel. Zur pH-Einstellung kann Borsäure verwendet werden.

Der Wachszusatz dient einem verbesserten Oberflächenbild und wasserabweisenden Effekt des auf die betreffende Unterlage aufgetragenen Anstrichmittels. Ferner kann durch das Wachs die Stabilität des Anstrichmittels erhöht werden. Es werden natürliche Wachse, wie z.B. Bienenwachs und Carnaubawachs, verwendet.

Als Pigmente und Farbstoffe werden vorzugsweise Pflanzenfarbstoffe sowie in der Natur vorkommende Pigmente verwendet. Es können jedoch auch, falls erforderlich synthetische Pigmente und Farbstoffe eingesetzt werden.

Füllstoffe, wie Kreide, Talk u.s.w. sind als Zusatz geeignet, wobei die Kreide gleichzeitig zur Pigmentierung dient.

Eine bevorzugte Zusammensetzung des erfindungsgemäßen Anstrichmittels enthält die Ölkomponente und Harzkomponente in einem Gewichtsverhältnis von 1,5:1 bis 2,5:1. Der Gehalt an Ölen, deren Verseifungsprodukten oder Verkochungsprodukten liegt dann im Bereich von 1,8-50 Gew.-%. Besonders bevorzugt ist ein Gehalt von 2,16 - 44 Gew.-%, was einem Gewichtsverhältnis von 1,8:1 bis 2,2:1 entspricht.

In einer weiteren bevorzugten Ausführungsform hat das erfindungsgemäße Anstrichmittel folgende Zusammensetzung:
0,5 - 2 Gew.-% Alkalien
4 - 15 Gew.-% natürliche harte Harze und/oder natürliche, gehärtete Harze
5,2 - 37,5 Gew.-% natürliche Öle, deren Verseifungsprodukte und/oder Verkochungsprodukte
1 - 8 Gew.-% Hilfsmittel
0,3 - 3 Gew.-% natürliche Wachse
2 - 20 Gew.-% Pigmente und/oder Farbstoffe
0 - 10 Gew.-% Füllstoffe
Rest Wasser,
wobei das Gewichtsverhältnis der Olkomponente zur Harzkomponente 1,3:1 bis 2,5:1 beträgt. Bei dem bevorzugten Gewichtsverhältnis von 1,5:1 bis 2,5:1 liegt der Gehalt an Ölen, deren Verkochungs- und/oder Verseifungsprodukten im Bereich von 6 - 37,5 Gew.-%. Besonders bevorzugt ist ein Gehalt von 7,2 - 33 Gew.-%, was einem Gewichtsverhältnis von 1,8:1 bis 2,2:1 entspricht.

Das erfindungsgemäße Anstrichmittel kann, wie folgt, hergestellt werden. Die Harzkomponente wird durch Erwärmen verflüssigt und dann unter Rühren die Alkalien mit einem Teil des Wassers zugegeben. Anschließend werden nach und nach die Ölkomponente und die übrigen Bestandteile einschließlich Wasser zugesetzt. Geht man von einem Verkochungsprodukt von Harz, Öl und Glycerin aus, so werden diesem Alkali sowie nach und nach die übrigen Bestandteile unter Rühren zugesetzt. Es ist auch möglich, die Harz- und Ölkomponenten unter Rühren zu vermischen, dann Alkali mit einem Teil des Wassers sowie anschließend nach und nach die übrigen Bestandteile zuzumischen. Der pH-Wert des Anstrichmittels wird auf Werte im Bereich von 6,5 bis 8 eingesetzt.

Die Erfindung wird an Hand der folgenden Beispiele näher erläutert.

### Beispiel 1

In diesem Beispiel wird eine lasierende Beschichtung für den Gebrauch im Innenbereich hergestellt. Folgende Bestandteile werden verwendet:
1,5 Gew.-% Borax
4 Gew.-% Dammarharz
2 Gew.-% Schellack
6 Gew.-% Leinöl
6 Gew.-% Ricinus-Standöl
0,8 Gew.-% Rosmarinöl
0,8 Gew.-% Citrusschalenöl
1,5 Gew.-% Milchcasein
2,5 Gew.-% Ethanol
1,5 Gew.-% Bienenwachs
5 Gew.-% Persischrot
Rest Wasser.

Die Harze werden durch Erwärmen verflüssigt, Borax mit einem Teil des Wassers unter Rühren zugegeben, die Öle zugesetzt und dann die übrigen Komponenten nach und nach unter Rühren zugemischt.

### Beispiel 2

In diesem Beispiel wird eine deckende Beschichtung für Anstriche im Außenbereich hergestellt. Folgende Bestandteile werden verwendet.
1,5 Gew.-% Ammoniak
3,5 Gew.-% Schellack
6,5 Gew.-% Kolophonium-Glycerinester
8 Gew.-% Leinöl
12 Gew.-% Ricinus-Standöl
0,8 Gew.-% Rosmarinöl
0,8 Gew.-% Citrusschalenöl
1,5 Gew.-% Milchcasein
3,5 Gew.-% Ethanol
0,8 Gew.-% Borsäure
0,5 Gew.-% Bienenwachs
0,5 Gew.-% Carnaubawachs
17,5 Gew.-% Titandioxid
Rest Wasser
Die Komponenten werden, wie in Beispiel 1 beschrieben, miteinander vermischt.

## Patentansprüche

1. Wasserverdünnbares, lasierendes oder deckendes Anstrichmittel, das Harz, Öl, Hilfsmittel, Alkalien und Wasser enthält und durch die folgende Zusammensetzung gekennzeichnet ist:
0,05 - 2,5 Gew.-% Alkalien
1,2 - 20 Gew.-% natürliche harte und/oder natürliche, gehärtete Harze
1,56 - 50 Gew.-% natürliche Öle, deren Verseifungsprodukte und/oder Verkochungsprodukte
0,05 - 10 Gew.-% Hilfsmittel
0 - 10 Gew.-% natürliche Wachse
0 - 30 Gew.-% Pigmente und/oder Farbstoffe
0 - 30 Gew.-% Füllstoffe
Rest Wasser,
wobei das Gewichtsverhältnis von Ölen, deren Verseifungsprodukten und Verkochungsprodukten zu den Harzen 1,3:1 bis 2,5:1 beträgt.

2. Anstrichmittel nach Anspruch 1, dadurch gekennzeichnet, daß der Gehalt an Ölen, deren Verseifungsprodukten und/ oder Verkochungsprodukten 1,8 - 50 Gew.-% beträgt.

3. Anstrichmittel nach Anspruch 2, dadurch gekennzeichnet, daß der Gehalt an Ölen, deren Verseifungsprodukten und/ oder Verkochungsprodukten 2,16 - 44 Gew.-% beträgt.

4. Anstrichmittel nach Anspruch 1, gekennzeichnet, durch folgende Zusammensetzung:
0,5 - 2 Gew.-% Alkalien
4 - 15 Gew.-% natürliche harte und/oder natürliche gehärtete Harze
5,2 - 37,5 Gew.-% natürliche Öle, deren Verseifungsprodukte und/oder Verkochungsprodukte
1 - 8 Gew.-% Hilfsmittel
0,3 - 3 Gew.-% natürliche Wachse
2 - 20 Gew.-% Pigmente und/oder Farbstoffe
0 - 10 Gew.-% Füllstoffe
Rest Wasser.

5. Anstrichmittel nach Anspruch 4, dadurch gekennzeichnet, daß der Gehalt an natürlichen Ölen, deren Verseifungsprodukten und/oder Verkochungsprodukten 6 - 37,5 Gew.-% beträgt.

6. Anstrichmittel nach Anspruch 5, dadurch gekennzeichnet, daß der Gehalt an natürlichen Ölen, deren Verseifungsprodukten und/oder Verkochungsprodukten 7,2 - 33 Gew.% beträgt.

7. Anstrichmittel nach einem der Ansprüche 1 bis 6, dadurch gekennzeichnet, daß als Alkalien Borax, Ammoniak oder Hirschhornsalz enthalten ist.

8. Anstrichmittel nach einem der Ansprüche 1 bis 7, dadurch gekennzeichnet, daß als Hilfsmittel Dispergiermittel, Konservierungsmittel, Mittel zur Viskositätseinstellung und/oder Mittel zur Einstellung des pH-Wertes enthalten sind.

9. Anstrichmittel nach einem der Ansprüche 1 bis 8, dadurch gekennzeichnet, daß Pflanzenfarbstoffe und/oder in der Natur vorkommende Pigmente enthalten sind.
